(19) Europäisches Patentamt
European Patent Office
Office européen des brevets

(11) **EP 4 319 074 A1**

(12) **EUROPEAN PATENT APPLICATION**
published in accordance with Art. 153(4) EPC

(43) Date of publication:
**07.02.2024 Bulletin 2024/06**

(21) Application number: **21933579.1**

(22) Date of filing: **29.03.2021**

(51) International Patent Classification (IPC):
***H04L 27/26*** (2006.01)

(52) Cooperative Patent Classification (CPC):
**H04L 27/26**

(86) International application number:
**PCT/CN2021/083666**

(87) International publication number:
**WO 2022/204893 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Longgang
Shenzhen, Guangdong 518129 (CN)**

(72) Inventors:
- LIU, Fengwei
  **Shenzhen, Guangdong 518129 (CN)**
- XU, Minghui
  **Shenzhen, Guangdong 518129 (CN)**
- QIU, Jing
  **Shenzhen, Guangdong 518129 (CN)**

(74) Representative: **Huawei European IPR
Huawei Technologies Duesseldorf GmbH
Riesstraße 25
80992 München (DE)**

(54) **MODULATION AND CODING DETERMINATION METHOD AND RELATED DEVICE**

(57) This application discloses a modulation and coding determining method and a related device, applied to a terminal device. The method includes: receiving scheduling information sent by a network device, where the scheduling information includes a modulation and coding scheme MCS index and an actual scheduled bandwidth; determining a modulation mode based on the MCS index; determining a coding parameter based on the modulation mode and the actual scheduled bandwidth; and performing channel coding on a signal based on the coding parameter to obtain a coded signal. The coding parameter may be determined based on the scheduling information, and coding is performed based on the coding parameter, so as to improve spectral efficiency.

FIG. 1C

**Description**

**TECHNICAL FIELD**

This application relates to the field of communications technologies, and in particular, to a modulation and coding determining method and a related device.

**BACKGROUND**

The new radio (New Radio, NR) protocol uses an orthogonal frequency division multiplexing (Orthogonal Frequency Division Multiplexing, OFDM) waveform in a downlink and uses an OFDM waveform and a discrete fourier transformation spread orthogonal frequency division multiplexing (Discrete Fourier Transformation spread OFDM, DFT-s-OFDM) waveform in an uplink. The OFDM waveform has advantages such as flexible frequency division multiplexing, good compatibility with multiple-input multiple-output (multiple-in multipleout, MIMO), and good link performance in a frequency-selective channel. However, the OFDM waveform has a large peak to average power ratio (Peak to average power ratio, PAPR), and needs to work in a linear range of a power amplifier. The DFT-s-OFDM waveform exhibits strong compatibility with OFDM and has a significantly lower PAPR than OFDM. With a same power amplifier, the DFT-s-OFDM waveform can achieve larger output power than the OFDM waveform. Therefore, the DFT-s-OFDM waveform can be used to improve uplink coverage.

To further improve the PAPR advantage of DFT-s-OFDM, pi/2-binary phase shift keying (pi/2-Binary Phase Shift Keying, pi/2-BPSK) modulation is introduced in the NR. In addition, when the terminal device is indicated to perform uplink sending by using pi/2-BPSK modulation, a spectral shaping technology may be additionally used to further reduce a PAPR of a sent signal, thereby increasing transmit signal power and improving coverage.

In an existing solution, pi/2-BPSK is applicable only to uplink transmission with low spectral efficiency. If a low PAPR is required for uplink transmission, spectral efficiency is reduced.

**SUMMARY**

Embodiments of this application provide a modulation and coding determining method and a related device, so that a coding parameter can be determined based on scheduling information, and coding can be performed based on the coding parameter, to improve spectral efficiency.

According to a first aspect, an embodiment of this application provides a modulation and coding determining method, applied to a terminal device, where the method includes:

   receiving scheduling information sent by a network device, where the scheduling information includes a modulation and coding scheme MCS index and an actual scheduled bandwidth;
   determining a modulation mode based on the MCS index;
   determining a coding parameter based on the modulation mode and the actual scheduled bandwidth; and
   performing channel coding on a signal based on the coding parameter, to obtain a coded signal.

In this example, the terminal device determines the modulation mode based on the MCS index in the received scheduling information sent by the network device, determines the coding parameter based on the modulation mode and the actual scheduled bandwidth, and performs coding on the signal based on the coding parameter to obtain the coded signal. In this way, the coding parameter can be determined based on the obtained modulation mode and the actual scheduled bandwidth, and the terminal device obtains a relatively high coverage capability gain at the MCS index, thereby improving uplink spectral efficiency.

With reference to the first aspect, in a possible implementation, the coding parameter includes at least a transport block size and an adjusted code rate, and the determining a coding parameter based on the modulation mode and the actual scheduled bandwidth includes:

   determining a bandwidth adjustment factor based on the modulation mode;
   determining a virtual scheduled bandwidth based on the bandwidth adjustment factor and the actual scheduled bandwidth;
   determining the adjusted code rate based on the modulation mode and the bandwidth adjustment factor; and
   determining the transport block size based on the adjusted code rate and the virtual scheduled bandwidth.

In this example, the virtual scheduled bandwidth is determined by using the determined bandwidth adjustment factor and the actual scheduled bandwidth, and the terminal device may perform truncation processing based on the virtual scheduled bandwidth, so that the terminal device obtains a relatively high coverage capability gain at the MCS index, and determines the adjusted code rate based on the modulation mode and the bandwidth adjustment factor, so that a transmission rate supported by each MCS index increases smoothly, so that the terminal device can perform uplink transmission more stably.

With reference to the first aspect, in a possible implementation, the determining the adjusted code rate based on the modulation mode and the bandwidth adjustment factor includes:

> determining an original code rate based on the modulation mode; and
> determining the adjusted code rate based on the original code rate and the bandwidth adjustment factor.

In this example, the original code rate is determined based on the modulation mode, and the adjusted code rate is determined based on the original code rate and the bandwidth adjustment factor, so that a transmission rate supported by each MCS index increases smoothly, and the terminal device can perform uplink transmission more stably.

With reference to the first aspect, in a possible implementation, the determining a modulation mode based on the MCS index includes:

> determining an index interval in which the MCS index is located; and
> determining the modulation mode based on the index interval.

In this example, the modulation mode is determined by using the index interval in which the MCS index is located, so that the modulation mode can be quickly determined, thereby improving efficiency of determining the modulation mode.

With reference to the first aspect, in a possible implementation, the method further includes:
determining a modulation mode for retransmission based on the modulation mode.

With reference to the first aspect, in a possible implementation, the method further includes:
sending a first MCS index to the network device, where the first MCS index is a highest MCS index of pi/2-BPSK used by the terminal device for transmission.

In this example, the first MCS index is sent to the network device, to notify the network device of the highest MCS index of pi/2-BPSK used by the terminal device to perform transmission, so that the MCS index can be better indicated.

With reference to the first aspect, in a possible implementation, the method further includes:
sending a second MCS index to the network device, where the second MCS index is a highest MCS index of FT-pi/2-BPSK used by the terminal device for transmission.

With reference to the first aspect, in a possible implementation, the method further includes:

> determining a type of a DMRS based on the modulation mode; and
> determining a sequence length of the DMRS based on the actual scheduled bandwidth.

With reference to the first aspect, in a possible implementation, the method further includes:

> performing truncation and filtering on the coded signal to obtain a filtered signal; and
> multiplexing the filtered signal and the DMRS to obtain a multiplexed signal.

With reference to the first aspect, in a possible implementation, the method further includes:

> multiplexing the DMRS and the coded signal to obtain a multiplexed signal; and
> performing truncation and filtering on the multiplexed signal to obtain a filtered signal.

With reference to the first aspect, in a possible implementation, the method further includes:
receiving first index information sent by the network device, where the first index information is used to indicate the highest MCS index of pi/2-BPSK used by the terminal device for transmission.

With reference to the first aspect, in a possible implementation, the method further includes:
receiving second index information sent by the network device, where the second index information is used to indicate the highest MCS index of FT-pi/2-BPSK used by the terminal device for transmission.

With reference to the first aspect, in a possible implementation, the method further includes:
receiving a bandwidth adjustment factor sent by the network device.

In this example, the bandwidth adjustment factor sent by the network device is received, and the virtual scheduled bandwidth may be determined based on the bandwidth adjustment factor sent by the network device. This improves efficiency of determining the virtual scheduled bandwidth.

According to a second aspect, an embodiment of this application provides a modulation and coding determining method, applied to a network device, where the method includes:

determining scheduling information, where the scheduling information includes a modulation and coding scheme MCS index and an actual scheduled bandwidth; and

sending the scheduling information, where the scheduling information is used to indicate a terminal device to perform channel coding.

With reference to the second aspect, in a possible implementation, the method further includes:
sending first index information to the terminal device, where the first index information is used to indicate a highest MCS index of pi/2-BPSK used by the terminal device for transmission.

With reference to the second aspect, in a possible implementation, the method further includes:
sending second index information to the terminal device, where the second index information is used to indicate a highest MCS index of FT-pi/2-BPSK used by the terminal device for transmission.

With reference to the second aspect, in a possible implementation, the method further includes:
sending a bandwidth adjustment factor to the terminal device.

With reference to the second aspect, in a possible implementation, the method further includes:
receiving a first MCS index, where the first MCS index is the highest MCS index of pi/2-BPSK used by the terminal device for transmission.

With reference to the second aspect, in a possible implementation, the method further includes:
receiving a second MCS index, where the second MCS index is the highest MCS index of FT-pi/2-BPSK used by the terminal device for transmission.

According to a third aspect, an embodiment of this application provides a terminal device, where the device includes:

a receiving unit, configured to receive scheduling information sent by a network device, where the scheduling information includes a modulation and coding scheme MCS index and an actual scheduled bandwidth;

a first determining unit, configured to determine a modulation mode based on the MCS index;

a second determining unit, configured to determine a coding parameter based on the modulation mode and the actual scheduled bandwidth; and

a coding unit, configured to perform channel coding on a signal based on the coding parameter, to obtain a coded signal.

With reference to the third aspect, in a possible implementation, the coding parameter includes at least a transport block size and an adjusted code rate, and the second determining unit is configured to:

determine a bandwidth adjustment factor based on the modulation mode;

determine a virtual scheduled bandwidth based on the bandwidth adjustment factor and the actual scheduled bandwidth;

determine the adjusted code rate based on the modulation mode and the bandwidth adjustment factor; and

determine the transport block size based on the adjusted code rate and the virtual scheduled bandwidth.

With reference to the third aspect, in a possible implementation, in the aspect of determining the adjusted code rate based on the modulation mode and the bandwidth adjustment factor, the second determining unit is configured to:

determine an original code rate based on the modulation mode; and

determine the adjusted code rate based on the original code rate and the bandwidth adjustment factor.

With reference to the third aspect, in a possible implementation, the first determining unit is configured to:

determine an index interval in which the MCS index is located; and

determine the modulation mode based on the index interval.

With reference to the third aspect, in a possible implementation, the device is further configured to:
determine a modulation mode for retransmission based on the modulation mode.

With reference to the third aspect, in a possible implementation, the device is further configured to:
send a first MCS index to the network device, where the first MCS index is a highest MCS index of pi/2-BPSK used by the terminal device for transmission.

With reference to the third aspect, in a possible implementation, the device is further configured to:
send a second MCS index to the network device, where the second MCS index is a highest MCS index of FT-pi/2-BPSK used by the terminal device for transmission.

With reference to the third aspect, in a possible implementation, the device is further configured to:

determine a type of a DMRS based on the modulation mode; and
determine a sequence length of the DMRS based on the actual scheduled bandwidth.

With reference to the third aspect, in a possible implementation, the device is further configured to:

perform truncation and filtering on the coded signal to obtain a filtered signal; and
multiplex the filtered signal and the DMRS to obtain a multiplexed signal.

With reference to the third aspect, in a possible implementation, the device is further configured to:

multiplex the DMRS and the coded signal to obtain a multiplexed signal; and
perform truncation and filtering on the multiplexed signal to obtain a filtered signal.

With reference to the third aspect, in a possible implementation, the device is further configured to:
receive first index information sent by the network device, where the first index information is used to indicate the highest MCS index of pi/2-BPSK used by the terminal device for transmission.

With reference to the third aspect, in a possible implementation, the device is further configured to:
receive second index information sent by the network device, where the second index information is used to indicate the highest MCS index of FT-pi/2-BPSK used by the terminal device for transmission.

With reference to the third aspect, in a possible implementation, the device is further configured to:
receive a bandwidth adjustment factor sent by the network device.

According to a fourth aspect, an embodiment of this application provides a network device. The device includes:

a determining unit, configured to determine scheduling information, where the scheduling information includes a modulation and coding scheme MCS index and an actual scheduled bandwidth; and
a sending unit, configured to send the scheduling information, where the scheduling information is used to indicate a terminal device to perform channel coding.

With reference to the fourth aspect, in a possible implementation, the device is further configured to:
send first index information to the terminal device, where the first index information is used to indicate a highest MCS index of pi/2-BPSK used by the terminal device for transmission.

With reference to the fourth aspect, in a possible implementation, the device is further configured to:
send second index information to the terminal device, where the second index information is used to indicate a highest MCS index of FT-pi/2-BPSK used by the terminal device for transmission.

With reference to the fourth aspect, in a possible implementation, the device is further configured to:
send a bandwidth adjustment factor to the terminal device.

With reference to the fourth aspect, in a possible implementation, the device is further configured to:
receive a first MCS index, where the first MCS index is the highest MCS index of pi/2-BPSK used by the terminal device for transmission.

With reference to the fourth aspect, in a possible implementation, the device is further configured to:
receive a second MCS index, where the second MCS index is the highest MCS index of FT-pi/2-BPSK used by the terminal device for transmission.

According to a fifth aspect, an embodiment of this application provides a terminal device, including:

a memory, configured to store instructions; and
at least one processor, coupled to the memory, where
when the at least one processor executes the instructions, the instructions enable the processor to perform the method according to any implementation of the first aspect.

According to a sixth aspect, an embodiment of this application provides a network device, including:

a memory, configured to store instructions; and

at least one processor, coupled to the memory, where

when the at least one processor executes the instructions, the instructions enable the processor to perform the method according to any implementation of the second aspect.

According to a seventh aspect, an embodiment of this application provides a computer storage medium. The computer storage medium stores a computer program, and the computer program includes program instructions. When the program instructions are executed by a processor, the processor is enabled to perform some or all methods in the first aspect and the second aspect.

These or other aspects of this application are more concise and easier to understand in the description of the following embodiments.

## BRIEF DESCRIPTION OF DRAWINGS

To describe the technical solutions in embodiments of this application or in the current technology more clearly, the following briefly describes the accompanying drawings for describing embodiments or the current technology. It is clear that the accompanying drawings in the following description show some embodiments of this application, and a person of ordinary skill in the art may still derive other drawings from these accompanying drawings without creative efforts.

FIG. 1A is a schematic flowchart in which a terminal device uses an FT-pi/2-BPSK modulation mode according to an embodiment of this application;

FIG. 1B is a schematic flowchart in which a terminal device uses FDSS-QPSK according to an embodiment of this application;

FIG. 1C is a schematic diagram of interaction in a modulation and coding determining method according to an embodiment of this application;

FIG. 1D is a schematic diagram of an MCS index table according to an embodiment of this application;

FIG. 2 is a schematic diagram of a structure of a terminal device according to an embodiment of this application;

FIG. 3 is a schematic diagram of a structure of another terminal device according to an embodiment of this application;

FIG. 4 is a schematic diagram of a structure of a network device according to an embodiment of this application; and

FIG. 5 is a schematic diagram of a structure of another network device according to an embodiment of this application.

## DESCRIPTION OF EMBODIMENTS

The following describes embodiments of this application with reference to the accompanying drawings.

An application architecture in embodiments of this application may be a wireless communication system, and the wireless communication system includes a network device and a terminal device. The following first describes the network device and the terminal device in embodiments of this application. Details are as follows:

The network device may be a device that can communicate with the terminal device. The network device may be a base station, a relay station, or an access point. The base station may be a BTS (Base Transceiver Station, base transceiver station) in a GSM (Global System for Mobile Communications, global system for mobile communications) or CDMA (Code Division Multiple Access, code division multiple access) network, or may be an NB (NodeB) in WCDMA (Wideband Code Division Multiple Access, wideband code division multiple access), or may be an eNB or eNodeB (Evolved NodeB) in LTE (Long Term Evolution, long term evolution). Alternatively, the network device may be a radio controller in a CRAN (Cloud Radio Access Network, cloud radio access network) scenario. Alternatively, the network device may be a base station device in a future 5G network or a network device in a future evolved PLMN network. Alternatively, the network device may be a wearable device or an in-vehicle device.

The terminal device may be UE (User Equipment, user equipment), an access terminal, a terminal unit, a terminal station, a mobile station, a mobile console, a remote station, a remote terminal, a mobile device, a terminal terminal, a terminal, a wireless communication device, a terminal agent, a terminal apparatus, or the like. The access terminal may be a cellular phone, a cordless phone, a SIP (Session Initiation Protocol, session initiation protocol) phone, a WLL (Wireless Local Loop, wireless local loop) station, a PDA (Personal Digital Assistant, personal digital assistant), a handheld device or a computing device having a wireless communication function, or another processing device connected to a wireless modem, an in-vehicle device, a wearable device, a terminal device in a future 5G network or a terminal device in a future evolved PLMN network, or the like.

The following acronyms and abbreviations are used in embodiments of this application: DFT (discrete fourier transformation, Discrete Fourier Transformation), OFDM (orthogonal frequency division multiplexing, Orthogonal Frequency Division Multiplexing), QAM (quadrature amplitude modulation, Quadrature Amplitude Modulation), QPSK (quadrature phase shift keying, Quadrature Phase Shift Keying), FDSS-QPSK (frequency domain spectral shaping-QPSK, Frequency domain spectral shaping-QPSK), DMRS (demodulation reference signal, Demodulation Reference Signal), DFT-s-OFDM (discrete fourier transformation spread orthogonal frequency division multiplexing, DFT spread OFDM), RB (resource block, resource block), FT (frequency truncating, frequency truncating), and the like.

To better understand the modulation and coding determining method in the embodiments of this application, the following briefly describes a modulation mode.

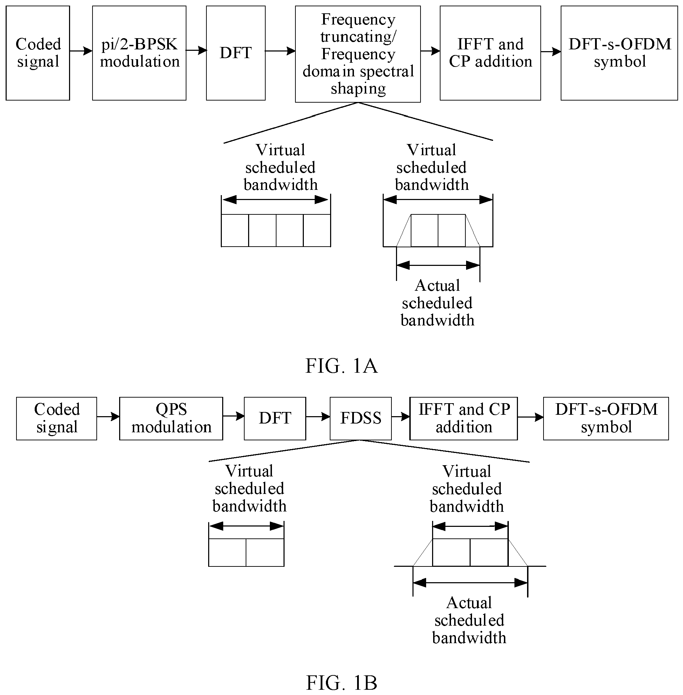

(1) FIG. 1A shows a processing procedure in which a terminal device uses an FT-pi/2-BPSK modulation mode. Details are as follows:

pi/2-BPSK modulation is performed on a coded signal, to obtain a modulated signal. DFT is performed on the modulated signal, to transform the signal to frequency domain, to obtain a frequency domain signal. DFT may also be referred to as transform-domain precoding. The terminal device and the network device determine a quantity of DFT points based on a virtual scheduled bandwidth. After DFT, the terminal device truncates the frequency domain signal, or maps only a part of the frequency domain signal to a subcarrier. For example, a DFT-transformed signal block (or a complex symbol block, a complex sampling block) is $[X\_0, X\_1, ..., X\_M-1]$. The terminal device maps $[X\_m1, ..., X\_m2]$ to a subcarrier, or sets remaining complex symbols and remaining samples to zero, where $0<m1$, $m2<M-1$, and M is a quantity of DFT points. A quantity of elements in $[X\_0, X\_1, ..., X\_M-1]$ corresponds to the virtual scheduled bandwidth, and a quantity of elements in $[X\_m1, ..., X\_m2]$ corresponds to an actual scheduled bandwidth. In this case, the virtual scheduled bandwidth is generally greater than the actual scheduled bandwidth. Optionally, the terminal device may perform spectral shaping on the signal through frequency domain weighting or time domain filtering. Then, the terminal device performs operations such as inverse fast Fourier transformation IFFT and cyclic prefix (Cyclic Prefix, CP) addition, to generate a DFT-s-OFDM symbol.

(2) FIG. 1B shows a processing procedure in which a terminal device uses FDSS-QPSK.

The terminal device performs QPSK modulation on a coded signal to obtain a modulated signal; and the terminal device performs DFT on the modulated signal to transform the signal to frequency domain, to obtain a frequency domain signal. DFT may also be referred to as transform-domain precoding. The terminal device and the network device determine a quantity of DFT points based on a virtual scheduled bandwidth. After DFT, the terminal device performs cyclic extension on the frequency domain signal, and then maps the frequency domain signal to a subcarrier. For example, a DFT-transformed signal block (or a complex symbol block, a complex sampling block) is $[X\_0, X\_1, ..., X\_M-1]$, and the terminal device maps $[X\_m1, ..., X\_M-1, X\_0, ..., X\_M-1, X\_0, ..., X\_m2]$ to a subcarrier, where $0<m1$, $m2<M-1$, and M is a quantity of DFT points. A size of $[X\_0, X\_1, ..., X\_M-1]$ corresponds to the virtual scheduled bandwidth, and a size of $[X\_m1, ..., X\_M-1, X\_0, ..., X\_M-1, X\_0, ..., X\_m2]$ corresponds to an actual scheduled bandwidth. In this case, the virtual scheduled bandwidth is generally less than the actual scheduled bandwidth. Optionally, the terminal device may perform spectral shaping on the signal through frequency domain weighting or time domain filtering. Then, the terminal device performs operations such as IFFT and CP addition, to generate a DFT-s-OFDM symbol. It should be understood that FDSS-QPSK may also be extended to another modulation mode, for example, 16QAM, 64QAM, or PI/4-QPSK.

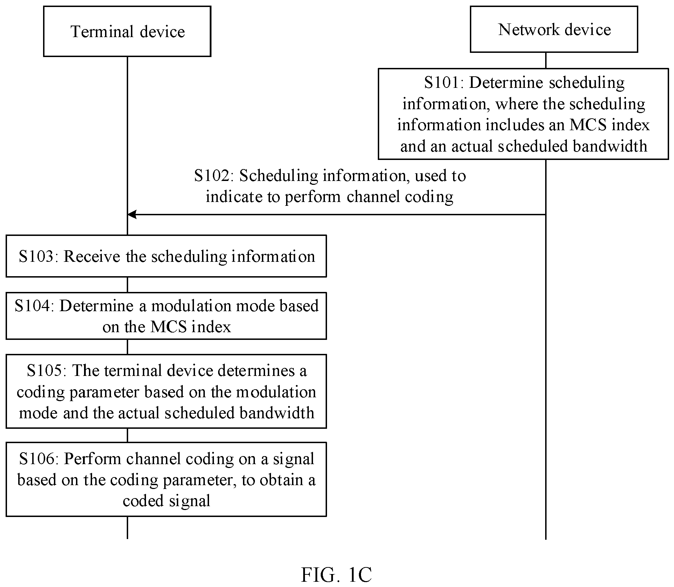

FIG. 1C is a schematic diagram of interaction in a modulation and coding determining method according to an embodiment of this application. As shown in FIG. 1C, a modulation mode includes:

S101: A network device determines scheduling information, where the scheduling information includes a modulation and coding scheme MCS index and an actual scheduled bandwidth.

The MCS index is an index of a modulation and coding scheme, and the MCS index may be configured or indicated by the network device. The MCS index includes an index range of FT-pi/2-BPSK modulation, and certainly further includes an index range corresponding to another modulation mode. The MCS index may be included in an MCS index table. The MCS index table includes a modulation order, and the modulation order is corresponding to a modulation mode. For example, FT-pi/2-BPSK modulation may be corresponding to a modulation order q.

In an existing NR standard, only indexes 0 and 1 in an MCS index table are configured as the modulation order q, and pi/2-BPSK is used only for the first two items in the MCS index table, that is, pi/2-BPSK can support only transmission with relatively low spectral efficiency. To achieve the same spectral efficiency as QPSK under the same bandwidth, a code rate in pi/2-BPSK needs to be twice a code rate in QPSK. In a high spectral efficiency range, a coding gain is limited because the code rate increases significantly. As a result, a noticeable loss of block error rate (block error rate, BLER) performance is caused, and the BLER loss is greater than a PAPR advantage of pi/2-BPSK relative to QPSK. Therefore, in the current technology, pi/2-BPSK with a low modulation order is applicable only to uplink transmission with low spectral efficiency. When uplink transmission has a relatively high spectral efficiency requirement, a terminal device may use only a modulation mode of QPSK or a higher modulation mode, resulting in a relatively high PAPR.

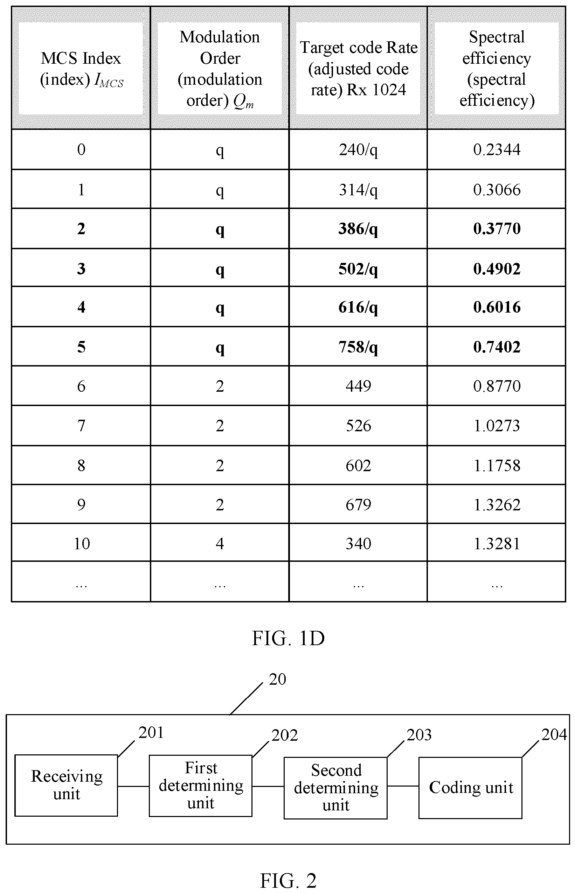

An embodiment of this application provides a schematic diagram of a possible MCS index table, as shown in FIG. 1D. All 0 to 5 in the MCS indexes correspond to a modulation order q, and the modulation order q may be configured as FT-pi/2-BPSK modulation. Specifically, if the network device configures an information element tp-pi/2-BPSK for the terminal device, the terminal device interprets q as 1, that is, pi/2-BPSK modulation; otherwise, the terminal device interprets q as 2, that is, QPSK modulation. The network device performs the same interpretation, that is, when the information element is configured for the terminal device, a signal from the terminal device is demodulated based on pi/2-BPSK; otherwise, a signal from the terminal device is demodulated based on QPSK.

When the terminal device uses FT-pi/2-BPSK, an actual bandwidth occupied by FT-pi/2-BPSK is less than a bandwidth occupied by common pi/2-BPSK. Therefore, an equivalent modulation order of FT-pi/2-BPSK is greater than 1. Therefore, when there is a high spectral efficiency requirement, a PAPR of a sent signal is reduced.

The actual scheduled bandwidth may be understood as a subcarrier mapping bandwidth of the terminal device, and is also a bandwidth of the terminal device during frequency domain spectral shaping.

S102: The network device sends the scheduling information to the terminal device, to indicate the terminal device to perform operations such as channel coding, rate matching, and modulation based on the scheduling information.

A manner in which the network device sends the scheduling information to the terminal device is not specifically limited.

S103: The terminal device receives the scheduling information sent by the network device, where the scheduling information includes the modulation and coding scheme MCS index and the actual scheduled bandwidth.

The terminal device may receive the scheduling information in a receiving manner corresponding to a sending manner of the network device. For example, the terminal device may obtain the scheduling information by demodulating a PDCCH.

The terminal device may perform operations such as channel coding, rate matching, and modulation based on the scheduling information.

S104: The terminal device determines a modulation mode based on the MCS index.

A possible method for determining the modulation mode based on the MCS index includes:

A1. Determine an index interval in which the MCS index is located.
A2. Determine the modulation mode based on the index interval.

The index interval in which the MCS index is located may be determined by using an MCS index table, and the modulation mode corresponding to the index interval is determined based on the MCS index table.

A method for determining, by the terminal device, the modulation mode based on the MCS index may be: determining the corresponding modulation mode from the MCS index table based on the MCS index. For example, if the MCS index is 1, it may be determined from the MCS index table that a corresponding index interval is [0, 5], and a modulation order corresponding to the index interval is q, so as to determine that the modulation mode is pi/2-BPSK or FT-pi/2-BPSK. For another example, if the MCS index is 6, a corresponding index interval is [6, 9], a corresponding modulation order is 2, and it is determined that the modulation mode is QPSK. Certainly, another modulation mode, such as FDSS-QPSK, pi/2-BPSK, 16QAM, or 64QAM, may be further determined based on the MCS index table.

In addition, FT-pi/2-BPSK and FDSS-QPSK not only indicate modulation modes, but also indicate signal processing modes such as bandwidth truncation and bandwidth extension.

The MCS index table may be configured by the network device for the terminal device, or may be fed back by the terminal device to the network device.

S105: The terminal device determines a coding parameter based on the modulation mode and the actual scheduled bandwidth.

The modulation mode in this embodiment of this application may be FT-pi/2-BPSK or FDSS-QPSK, or certainly may be another modulation mode, for example, pi/2-BPSK, QPSK, or 16QAM. When it is determined that the modulation mode is FT-pi/2-BPSK or FDSS-QPSK, the coding parameter may be determined based on the modulation mode and the actual scheduled bandwidth.

The coding parameter includes a transport block size and an adjusted code rate. A corresponding bandwidth adjustment factor may be determined based on the modulation mode, and the adjusted code rate and the transport block size are determined based on the bandwidth adjustment factor and the modulation mode.

S106: The terminal device performs channel coding on a signal based on the coding parameter, to obtain a coded signal.

The terminal device performs channel coding based on the adjusted code rate and the transport block size, to obtain the coded signal. The signal in this application may be a to-be-transmitted bit or the like.

In a possible implementation, a method for determining the coding parameter based on the modulation mode and the actual scheduled bandwidth may be as follows:

B1. Determine the bandwidth adjustment factor based on the modulation mode.
B2. Determine a virtual scheduled bandwidth based on the bandwidth adjustment factor and the actual scheduled bandwidth.
B3. Determine the adjusted code rate based on the modulation mode and the bandwidth adjustment factor.
B4. Determine the transport block size based on the adjusted code rate and the virtual scheduled bandwidth.

The modulation mode corresponds to the bandwidth adjustment factor, for example, a bandwidth adjustment factor corresponding to FT-pi/2-BPSK modulation makes a virtual scheduled bandwidth greater than an actual scheduled bandwidth, and a bandwidth adjustment factor corresponding to FDSS-QPSK makes a virtual scheduled bandwidth less than an actual scheduled bandwidth.

Certainly, the terminal device may alternatively receive the bandwidth adjustment factor from the network device.

When the modulation mode is FT-pi/2-BPSK modulation, a method for determining the virtual scheduled bandwidth may be:

$$\text{virtual scheduled bandwidth} = \text{rounding \{actual scheduled bandwidth/bandwidth adjustment factor\}} \quad (1);$$

or

$$\text{virtual scheduled bandwidth} = \text{rounding \{actual scheduled bandwidth x bandwidth adjustment factor\}} \quad (2).$$

The two calculation methods are respectively corresponding to different bandwidth adjustment factor definition methods. The bandwidth adjustment factor makes the virtual scheduled bandwidth greater than the actual scheduled bandwidth. A value range of the bandwidth adjustment factor in the calculation method (1) is (0,1], and the bandwidth adjustment factor in the calculation method (2) is greater than or equal to 1.

Herein, a rounding method may be rounding down, rounding up, or rounding off. The unit of the actual scheduled bandwidth and the virtual scheduled bandwidth may be an RB quantity, or may be a subcarrier quantity. Because the virtual scheduled bandwidth is a bandwidth for performing DFT by the terminal device, a size of the virtual scheduled bandwidth should meet: $Nt_{RB} = 2^{\alpha_2} 3^{\alpha_3} 5^{\alpha_5}$. $M_{RB}$ is the virtual scheduled bandwidth, and $\alpha_2$, $\alpha_3$, and $\alpha_5$ are positive integers greater than or equal to 0. It is assumed herein that the unit of the virtual scheduled bandwidth is an RB quantity.

In different actual scheduled bandwidth ranges, the network device may configure different bandwidth adjustment factors or specify a bandwidth adjustment factor set for the terminal device. The network device configures an actual scheduled bandwidth range division threshold, and the transmit end and the receive end indirectly determine the bandwidth adjustment factor according to the following table.

| Scheduled bandwidth N (RB) | Bandwidth adjustment factor |
| --- | --- |
| N<N1 | A1 |
| N1≤N<N2 | A2 |
| ... | ... |

In a possible implementation, the terminal device may report a recommended bandwidth adjustment factor to the network device. Similarly, the bandwidth adjustment factor reported by the terminal device may be associated with a bandwidth range, or actual scheduled bandwidth range division thresholds, namely N1, N2, and the like, are reported under a specified bandwidth adjustment factor.

Because the terminal device (and the network device) needs to perform a rounding operation when calculating the virtual scheduled bandwidth, an actual bandwidth adjustment factor may be additionally defined as follows: actual bandwidth adjustment factor = actual scheduled bandwidth/virtual scheduled bandwidth, or actual bandwidth adjustment factor = virtual scheduled bandwidth/actual scheduled bandwidth, where the two correspond to the foregoing calculation manner (1) and calculation manner (2) respectively.

When the modulation mode is FDSS-QPSK modulation, a method for determining the virtual scheduled bandwidth may be:

$$\text{virtual scheduled bandwidth} = \text{rounding \{actual scheduled bandwidth/bandwidth adjustment factor\}} \quad (3);$$

virtual scheduled bandwidth = rounding {actual scheduled bandwidth x bandwidth adjustment factor} (4);

or

virtual scheduled bandwidth = rounding {actual scheduled bandwidth/(1 + bandwidth adjustment factor)} (5).

The three calculation methods correspond to different bandwidth adjustment factor definition methods respectively. The bandwidth adjustment factor in the calculation method (3) is greater than or equal to 1; a value range of the bandwidth adjustment factor in the calculation method (3) is (0, 1]; a value range of the bandwidth adjustment factor in the calculation method (3) is [0, 1], and the bandwidth adjustment factor in the calculation method (3) meets a relationship: a3 = a1 - 1, where a3 is the bandwidth adjustment factor in the calculation method (5), and a1 is the bandwidth adjustment factor in the calculation method (3).

Herein, a rounding method may be rounding down, rounding up, or rounding off. The unit of the actual scheduled bandwidth and the virtual scheduled bandwidth may be an RB quantity, or may be a subcarrier quantity. Because the virtual scheduled bandwidth is a bandwidth for performing DFT by the terminal device, a size of the virtual scheduled bandwidth should meet: $M_{RB} = 2^{\alpha_2} 3^{\alpha_3} 5^{\alpha_5}$. $M_{RB}$ is the virtual scheduled bandwidth, and $\alpha_2$, $\alpha_3$, and $\alpha_5$ are positive integers greater than or equal to 0. It is assumed herein that the unit of the virtual scheduled bandwidth is an RB quantity.

In different actual scheduled bandwidth ranges, the network device may configure different bandwidth adjustment factors or specify a bandwidth adjustment factor set for the terminal device. The network device configures an actual scheduled bandwidth range division threshold, and a transmit end and a receive end indirectly determine the bandwidth adjustment factor according to the following table.

| Bandwidth range (RB) | Bandwidth adjustment factor |
|---|---|
| N<N1 | B1 |
| N1≤N<N2 | B2 |
| ... | ... |

In a possible implementation, for example, the bandwidth adjustment factor is defined according to the calculation method (3), where B1<B2<....

In a possible implementation, the terminal device reports a recommended bandwidth adjustment factor to the network device. Similarly, the bandwidth adjustment factor reported by the terminal device may be associated with a bandwidth range, or actual scheduled bandwidth range division thresholds, namely N1 and N2, are reported under a specified bandwidth adjustment factor.

Because the terminal device (and the network device) needs to perform a rounding operation when calculating the virtual scheduled bandwidth, an actual bandwidth adjustment factor may be additionally defined as follows: actual bandwidth adjustment factor = actual scheduled bandwidth/virtual scheduled bandwidth; actual bandwidth adjustment factor = actual scheduled bandwidth/virtual scheduled bandwidth - 1; or actual bandwidth adjustment factor = virtual scheduled bandwidth/actual scheduled bandwidth, where the foregoing three actual bandwidth adjustment factors correspond to the foregoing three bandwidth adjustment factors respectively.

When the adjusted code rate is being determined based on the modulation mode and the bandwidth adjustment factor, a corresponding code rate may be determined based on the modulation mode, and the adjusted code rate is determined based on the corresponding code rate and the bandwidth adjustment factor.

The transport block size may be determined based on the adjusted code rate and the virtual scheduled bandwidth according to a method for determining a transport block size in an existing solution. Details are not described herein.

In a possible implementation, a method of determining the adjusted code rate based on the modulation mode and the bandwidth adjustment factor includes the following steps.

C1. Determine an original code rate based on the modulation mode.

C2. Determine the adjusted code rate based on the original code rate and the bandwidth adjustment factor.

The original code rate is a code rate originally corresponding to the modulation mode, that is, a code rate corresponding to each MCS index in the MCS table, for example, a code rate corresponding to FT-pi/2-BPSK, for example, 240/1024 corresponding to an MCS index 0, or 314/1024 corresponding to an MCS index 1 (determined from the foregoing MCS index table).

The adjusted code rate may be determined according to a method shown in the following formula:

$$CR = CR\ 0 \text{ x bandwidth adjustment factor (6)};$$

or

$$CR = CR\ 0/\text{bandwidth adjustment factor (7)}.$$

CR is the adjusted code rate, and CR 0 represents a code rate when the terminal device uses pi/2-BPSK. In the foregoing formula, the bandwidth adjustment factor may be a bandwidth adjustment factor configured by the network device or defined in a protocol, or may be an actual bandwidth adjustment factor calculated by the terminal device based on the actual scheduled bandwidth and the virtual scheduled bandwidth. The configured bandwidth adjustment factor has a fixed value and is easy to calculate, while the actual bandwidth adjustment factor can be calculated more accurately, which can ensure that actual SE matches SE in an original MCS table as much as possible.

In a possible implementation, because an output power gain of FT-pi/2-BPSK or pi/2-BPSK relative to QPSK is known only to the terminal device, the terminal device may report, to the network device, a recommended MCS index interval that corresponds to FT-pi/2-BPSK or pi/2-BPSK in the MCS table.

For example, the terminal device sends a first MCS index to the network device, where the first MCS index is a highest MCS index of pi/2-BPSK used by the terminal device for transmission. The network device receives the first MCS index. Certainly, the first index may alternatively be a highest MCS index of FT-pi/2-BPSK used by the terminal device for transmission.

In addition, the terminal device may further send a second MCS index to the network device, where the second MCS index is a highest MCS index of FT-pi/2-BPSK used by the terminal device for transmission. The network device receives the second MCS index.

For example, the terminal device may recommend the first MCS index, and the first MCS index indicates a highest MCS index of pi/2-BPSK used by the terminal device. A value reported by the terminal device may be the first MCS index or the first MCS index plus 1.

The terminal device may additionally report the second MCS index, and the second MCS index indicates a highest MCS index of FT-pi/2-BPSK used by the terminal device. A value reported by the terminal device may be the second MCS index or the second MCS index plus 1. That a report threshold is an MCS index plus 1 is used as an example, as shown in the following table:

| Scheduling MCS index | Recommended modulation mode |
|---|---|
| 0≤M≤M1 | Pi/2-BPSK |
| M1≤M<M2 | FT-pi/2-BPSK |
| M2≤M | QPSK/16QAM/64QAM... |

When the report threshold is an MCS index, a position of an equal sign in the foregoing table needs to be changed. For example, 0≤M<M1 changes to 0<M≤M1.

Generally, the second MCS index is greater than or equal to the first MCS index. In an implementation, when the terminal device does not report second MCS index information, it indicates that the terminal device does not support FT-pi/2-BPSK; or when the terminal device does not support FT-pi/2-BPSK, the terminal device does not report the second MCS index information.

If the reported second MCS index is less than or equal to the first MCS index, it indicates that FT-pi/2-BPSK is not supported or is not recommended.

In a possible implementation, the network device may further send an MCS index to the terminal device, which may be specifically:

the network device sends first index information to the terminal device, where the first index information is used to indicate the highest MCS index of pi/2-BPSK used by the terminal device for transmission.

The network device may further send second index information to the terminal device, where the second index information is used to indicate the highest MCS index of FT-pi/2-BPSK used by the terminal device for transmission.

The first index information indicates the highest MCS index of pi/2-BPSK used by the terminal device for transmission. The first index information may include a third MCS index, and a value configured by the network device may be the third MCS index or the third MCS index plus 1.

The second index information indicates the highest MCS index of FT-pi/2-BPSK used by the terminal device for transmission. The second index information may include a fourth MCS index, and a value configured by the network device may be the fourth MCS index or the fourth MCS index plus 1.

A correspondence between a configured index and a specific modulation mode is similar to that in the foregoing table.

Generally, the fourth MCS index is greater than or equal to the third MCS index. In an implementation, when the network device does not configure the fourth MCS index, the terminal device does not perform FT-pi/2-BPSK transmission.

It should be understood that the network device may configure the third MCS index and the fourth MCS index without depending on reporting of the terminal device. In other words, the network device may perform configuration even if the terminal device does not perform reporting.

After reporting of the first/second MCS index and/or configuration of the third/fourth MCS index are completed, the terminal device uses pi/2-BPSK in MCS #0 to MCS #X, uses FT-pi/2-BPSK in MCS #X+1 to MCS #Y, and uses an index indicated by an MCS index table in an existing solution in MCS #Y+1 and above.

In a possible implementation, an output power gain of the modulation mode FDSS-QPSK or pi/2-BPSK relative to QPSK is only known to the terminal device. Therefore, the terminal device may report, to the network device, a recommended MCS index interval that corresponds to FDSS-QPSK or pi/2-BPSK in the MCS table.

For example, the terminal device may recommend the first MCS index, and the first MCS index indicates the highest MCS index of pi/2-BPSK used by the terminal device. A value reported by the terminal device may be the first MCS index or the first MCS index plus 1.

The terminal device may additionally report the second MCS index, and the second MCS index indicates the highest MCS index of FDSS-QPSK used by the terminal device. A value reported by the terminal device may be the second MCS index or the second MCS index plus 1.

That a report threshold is an MCS index plus 1 is used as an example, as shown in the following table:

| Scheduling MCS index | Recommended modulation mode |
|---|---|
| $0 \leq M < M1$ | Pi/2-BPSK |
| $M1 \leq M < M2$ | FDSS-QPSK |
| $M2 \leq M$ | QPSK/16QAM/64QAM... |

When the report threshold is an MCS index, a position of an equal sign in the foregoing table needs to be changed. For example, $0 \leq M < M1$ changes to $0 < M \leq M1$.

Generally, the second MCS index is greater than or equal to the first MCS index. In an implementation, when the terminal device does not report the second MCS index, it indicates that the terminal device does not support FDSS-QPSK; or when the terminal device does not support FDSS-QPSK, the terminal device does not report the second MCS index information.

If the reported second MCS index is less than or equal to the first MCS index, it indicates that FDSS-QPSK is not supported or is not recommended.

Certainly, the terminal device may alternatively receive first index information sent by the network device, where the first index information is used to indicate the highest MCS index of pi/2-BPSK used by the terminal device for transmission.

The terminal device may further receive second index information sent by the network device, where the second index information is used to indicate the highest MCS index of FT-pi/2-BPSK used by the terminal device for transmission.

In a possible implementation, the network device may further send an MCS index to the terminal device, which may be specifically as follows:

The network device sends the first index information to the terminal device, where the first index information is used to indicate the highest MCS index of pi/2-BPSK used by the terminal device for transmission. The first index information includes a third MCS index, and a value configured by the network device may be the third MCS index or the third MCS index plus 1.

The network device may further send the second index information to the terminal device, where the second index information is used to indicate the highest MCS index of FDSS-QPSK used by the terminal device for transmission. The second index information includes a fourth MCS index, and a value configured by the network device may be the fourth MCS index or the fourth MCS index plus 1. The network device configures fourth MCS index information for the terminal device only when the terminal device supports FDSS-QPSK.

For a correspondence between a configured index and a specific modulation mode, refer to the MCS index table shown in the foregoing embodiment.

Generally, the fourth MCS index is greater than or equal to the third MCS index. In an implementation, when the network device does not configure the fourth MCS index, the terminal device does not perform FDSS-QPSK transmission.

It should be understood that the network device may configure the third MCS index and the fourth MCS index without depending on reporting of the terminal device. In other words, the network device may perform configuration even if the terminal device does not perform reporting.

After reporting of the first/second MCS index and/or configuration of the third/fourth MCS index are completed, the terminal device uses pi/2-BPSK in MCS #0 to MCS #X, uses FDSS-QPSK in MCS #X+1 to MCS #Y, and uses a modulation mode indicated by an original MCS table in MCS #Y+1 and above.

In a possible implementation, because modulation modes are different, a corresponding modulation mode needs to be determined during retransmission. Specifically, the terminal device determines a modulation mode for retransmission based on the modulation mode.

For example, because FT-pi/2-BPSK and pi/2-BPSK are two modulation modes, when the terminal device supports the two modulation modes, an optional solution is: maintaining a quantity of rows corresponding to a retransmission MCS in an existing MCS table, but a specific modulation mode corresponding to the retransmission MCS is associated with an initial transmission modulation mode, that is, a same retransmission MCS index corresponds to different retransmission modulation modes in different initial transmission modulation modes, as shown in the following table.

| Modulation order or mode for initial transmission | MCS index | Modulation order or modulation mode | Others |
|---|---|---|---|
| pi/2-BPSK or FT-pi/2-BPSK or QPSK | 28 | pi/2-BPSK | |
| | 29 | FT-pi/2-BPSK | |
| | 30 | QPSK | |
| | 31 | 16QAM | |
| 16QAM/64QAM | 28 | FT-pi/2-BPSK | |
| | 29 | QPSK | |
| | 30 | 16QAM | |
| | 31 | 64QAM | |

In another optional solution, when the initial transmission modulation mode is any one of pi/2-BPSK, FT-pi/2-BPSK, or QPSK, the quantity of rows corresponding to the retransmission MCS in the existing MCS table is extended. For example, the last initial transmission MCS index is extended to a retransmission MCS.

| Modulation order or mode for initial transmission | MCS index | Modulation order or modulation mode | Others |
|---|---|---|---|
| pi/2-BPSK or FT-pi/2-BPSK or QPSK | 27 | pi/2-BPSK | |
| | 28 | FT-pi/2-BPSK | |
| | 29 | QPSK | |
| | 30 | 16QAM | |
| | 31 | 64QAM | |

(continued)

| Modulation order or mode for initial transmission | MCS index | Modulation order or modulation mode | Others |
|---|---|---|---|
| 16QAM/64QAM | 27 | 64QAM | Code rate = *948/1024, SE = 5.5547* |
| | 28 | FT-pi/2-BPSK | |
| | 29 | QPSK | |
| | 30 | 16QAM | |
| | 31 | 64QAM | |

In the foregoing two manners or table, it may be understood that modulation modes are classified into two groups: {pi/2-BPSK, FT-pi/2-BPSK, QPSK} and {16QAM, 64QAM}, and different groups correspond to different indications. Optionally, the foregoing grouping manner is merely an example, and may actually further include:

1. 16QAM may also be classified into the first group, that is, group 1 {pi/2-BPSK, FT-pi/2-BPSK, QPSK, 16QAM} and group 2 {64QAM}.
2. A fifth MCS index is used as a demarcation point, that is, group 1 {initial transmission MCS<fifth MCS index} and group 2 {initial transmission MCS≥fifth MCS index}, or group 1 {initial transmission MCS≤fifth MCS index} and group 2 {initial transmission MCS>fifth MCS index} are obtained through classification. The fifth MCS index may be understood as the fifth MCS index from top to bottom in the foregoing table.

When only pi/2-BPSK can be configured or pi/2-BPSK is not supported, the MCS index table in the existing solution is used.

When the terminal device supports FDSS-QPSK and the FDSS-QPSK modulation mode is configured, an optional solution is: maintaining a quantity of rows corresponding to the retransmission MCS in the existing MCS table, but a specific modulation mode corresponding to the retransmission MCS is associated with the initial transmission modulation mode, that is, a same retransmission MCS index corresponds to different retransmission modulation modes in different initial transmission modulation modes, as shown in the following table.

| Modulation order or mode for initial transmission | MCS index | Modulation order or modulation mode | Others |
|---|---|---|---|
| pi/2-BPSK or FDSS-QPSK or QPSK | 28 | pi/2-BPSK | |
| | 29 | FD-QPSK | |
| | 30 | QPSK | |
| | 31 | 16QAM | |
| 16QAM/64QAM | 28 | FDSS-QPSK or pi/2-BPSK | |
| | 29 | QPSK | |
| | 30 | 16QAM | |
| | 31 | 64QAM | |

In another optional solution, when the initial transmission modulation mode is any one of pi/2-BPSK, FDSS-QPSK, or QPSK, the quantity of rows corresponding to the retransmission MCS in the existing MCS table is extended, for example, the last initial transmission MCS index is extended to a retransmission MCS.

| Modulation order or mode for initial transmission | MCS index | Modulation order or modulation mode | Others |
|---|---|---|---|
| pi/2-BPSK or FDSS-QPSK or QPSK | 27 | pi/2-BPSK | |
| | 28 | FDSS-QPSK | |
| | 29 | QPSK | |
| | 30 | 16QAM | |
| | 31 | 64QAM | |
| 16QAM/64QAM | 27 | 64QAM | Code rate = *948/1024, SE = 5.5547* |
| | 28 | FDSS-QPSK | |
| | 29 | QPSK | |
| | 30 | 16QAM | |
| | 31 | 64QAM | |

In the foregoing two manners or table, it may be understood that modulation modes are classified into two groups {pi/2-BPSK, FDSS-QPSK, QPSK} and {16QAM, 64QAM}, and different groups correspond to different indications. Optionally, the foregoing grouping manner is merely an example, and may actually further include:

1. 16QAM may also be classified into the first group, that is, group 1 {pi/2-BPSK, FDSS-QPSK, QPSK, 16QAM} and group 2 {64QAM}.
2. A fifth MCS index is used as a demarcation point, that is, group 1 {initial transmission MCS<fifth MCS index} and group 2 {initial transmission MCS≥fifth MCS index}, or group 1 {initial transmission MCS≤fifth MCS index} and group 2 {initial transmission MCS>fifth MCS index} are obtained through classification. The fifth MCS index may be understood as the fifth MCS index from top to bottom in the foregoing table.

When FDSS-QPSK is not configured, the MCS index table in the existing solution is used.

In a possible implementation, the terminal device may further determine a sequence length of a DMRS, which is specifically as follows:

D1. Determine a type of the DMRS based on the modulation mode.
D2. Determine the sequence length of the DMRS based on the actual scheduled bandwidth.

Details may be as follows:

First, DMRS sequence selection when the terminal device uses a DFT-s-OFDM waveform is briefly described. In the existing NR protocol, there are two types of DMRS sequences that can be used for the DFT-s-OFDM waveform, including a low-PAPR sequence generation type 1 (Low-PAPR sequence generation type 1) and a low-PAPR sequence generation type 2 (Low-PAPR sequence generation type 2). When the terminal device uses pi/2-BPSK modulation, the terminal device may use the low-PAPR sequence generation type 2. When the terminal device uses another modulation mode, the terminal device uses the low-PAPR sequence generation type 1. Some terminal devices (for example, a terminal device of an NR R15 version) may not support the low-PAPR sequence generation type 2. In this case, even if the terminal device uses pi/2-BPSK modulation, the terminal device can still use only the low-PAPR sequence generation type 1.

When the modulation mode is FT-pi/2-BPSK, the sequence length of the DMRS may be generated based on the actual scheduled bandwidth, or may be generated based on the virtual scheduled bandwidth. If the DMRS sequence is generated based on the virtual scheduled bandwidth, the DMRS symbol also needs to undergo the same frequency truncating and filtering operations as a data symbol.

When the DMRS sequence is a frequency domain sequence (for example, a ZC sequence or a frequency domain computer search sequence), the DMRS sequence is directly truncated and filtered in frequency domain.

When the DMRS sequence is a time domain sequence (for example, a gold-sequence-based pi/2-BPSK modulation time domain sequence or time domain computer search sequence), DFT transformation is first performed on the DMRS sequence to frequency domain, and then truncation and filtering are performed in frequency domain.

When the modulation mode is FDSS-QPSK, the sequence length of the DMRS may be generated based on the actual scheduled bandwidth, or may be generated based on the virtual scheduled bandwidth. If the DMRS sequence is generated based on the virtual scheduled bandwidth, the DMRS symbol also needs to undergo the same frequency domain extension and filtering operations as a data symbol.

When the DMRS sequence is a frequency domain sequence (for example, a ZC sequence or a frequency domain computer search sequence), the DMRS sequence is directly truncated and filtered in frequency domain.

When the DMRS sequence is a time domain sequence (for example, a gold-sequence-based pi/2-BPSK modulation time domain sequence or time domain computer search sequence), DFT transformation is first performed on the DMRS sequence to frequency domain, and then truncation and filtering are performed in frequency domain.

Generally, QPSK does not use the low-PAPR sequence generation type 2. In a possible implementation, when the terminal device uses FDSS-QPSK, the network device may configure the low-PAPR sequence generation type 2 for FDSS-QPSK.

A frequency domain DMRS sequence and a time domain DMRS sequence are separately considered for a DMRS multiplexing manner used when the terminal device uses FT-pi/2-BPSK or FDSS-QPSK. Therefore, a proper DMRS sequence is configured for low-PAPR modulation, so that the DMRS matches a data PAPR, thereby improving transmission performance.

In a possible implementation, the terminal device may further perform filtering and multiplexing processing on the coded signal, which may be specifically as follows:

E1: Perform truncation and filtering on the coded signal to obtain a filtered signal.

E2. Multiplex the filtered signal and the DMRS to obtain a multiplexed signal.

The channel-coded signal undergoes pi/2-BPSK modulation, QPSK modulation, and the like after being scrambled, to obtain a modulated signal. The modulated signal undergoes a DFT operation after being grouped. The DFT operation is also referred to as transform-domain precoding. After the transform-domain coding is performed, truncation and filtering are performed on a signal obtained after the transform-domain coding, to obtain a filtered signal.

The terminal device may perform operations such as IFFT and CP addition on the multiplexed signal to generate a DFT-s-OFDM symbol or an OFDM symbol, and the terminal device sends the DFT-s-OFDM symbol or the OFDM symbol.

In a possible implementation, another method in which the terminal device performs filtering and multiplexing processing on the coded signal may be specifically as follows:

F1. Multiplex the DMRS and the coded signal to obtain a multiplexed signal.

F2. Perform truncation and filtering on the multiplexed signal to obtain a filtered signal.

The channel-coded signal undergoes pi/2-BPSK modulation, QPSK modulation, and the like after being scrambled, to obtain a modulated signal. The modulated signal undergoes a DFT operation after being grouped. The DFT operation is also referred to as transform-domain precoding. After the transform-domain coding is performed, a DMRS signal obtained after the transform-domain coding is multiplexed to obtain a multiplexed signal.

The terminal device may perform operations such as IFFT and CP addition on the filtered signal to generate a DFT-s-OFDM symbol or an OFDM symbol, and the terminal device sends the DFT-s-OFDM symbol or the OFDM symbol.

In a possible implementation, because signal power has a loss after frequency domain spectral shaping is performed on the signal compared with that before the frequency domain spectral shaping is performed, to compensate for the loss, a loss value may be calculated based on FDSS window setting, to increase power of the signal, so as to recover average power of the signal. For example, if a square average value of modulus values of an FDSS window on all subcarriers is $P_{win}$, that is, the signal loss is $10*\log10(1/P_{win})$dB, a power boost value is $10*\log10(1/P_{win})$dB, that is, the boosted signal $y=x*\sqrt{1/P_{win}}$, where x is a signal on any subcarrier after FDSS.

FIG. 2 shows a schematic diagram of a structure of a terminal device according to an embodiment of this application. As shown in FIG. 2, the terminal device 20 includes:

a receiving unit 201, configured to receive scheduling information sent by a network device, where the scheduling information includes a modulation and coding scheme MCS index and an actual scheduled bandwidth;
a first determining unit 202, configured to determine a modulation mode based on the MCS index;
a second determining unit 203, configured to determine a coding parameter based on the modulation mode and the actual scheduled bandwidth; and
a coding unit 204, configured to perform channel coding on a signal based on the coding parameter to obtain a coded signal.

In a possible implementation, the coding parameter includes at least a transport block size and an adjusted code rate, and the second determining unit 203 is configured to:

determine a bandwidth adjustment factor based on the modulation mode;
determine a virtual scheduled bandwidth based on the bandwidth adjustment factor and the actual scheduled bandwidth;
determine the adjusted code rate based on the modulation mode and the bandwidth adjustment factor; and
determine the transport block size based on the adjusted code rate and the virtual scheduled bandwidth.

In a possible implementation, in the aspect of determining the adjusted code rate based on the modulation mode and the bandwidth adjustment factor, the second determining unit 203 is configured to:

determine an original code rate based on the modulation mode; and
determine the adjusted code rate based on the original code rate and the bandwidth adjustment factor.

In a possible implementation, the first determining unit 202 is configured to:

determine an index interval in which the MCS index is located; and
determine the modulation mode based on the index interval.

In a possible implementation, the device is further configured to:
determine a modulation mode for retransmission based on the modulation mode.
In a possible implementation, the device is further configured to:
send a first MCS index to the network device, where the first MCS index is a highest MCS index of pi/2-BPSK used by the terminal device for transmission.
In a possible implementation, the device is further configured to:
send a second MCS index to the network device, where the second MCS index is a highest MCS index of FT-pi/2-BPSK used by the terminal device for transmission.
In a possible implementation, the device is further configured to:

determine a type of a DMRS based on the modulation mode; and
determine a sequence length of the DMRS based on the actual scheduled bandwidth.

In a possible implementation, the device is further configured to:

perform truncation and filtering on the coded signal to obtain a filtered signal; and
multiplex the filtered signal and the DMRS to obtain a multiplexed signal.

In a possible implementation, the device is further configured to:

multiplex the DMRS and the coded signal to obtain a multiplexed signal; and
perform truncation and filtering on the multiplexed signal to obtain a filtered signal.

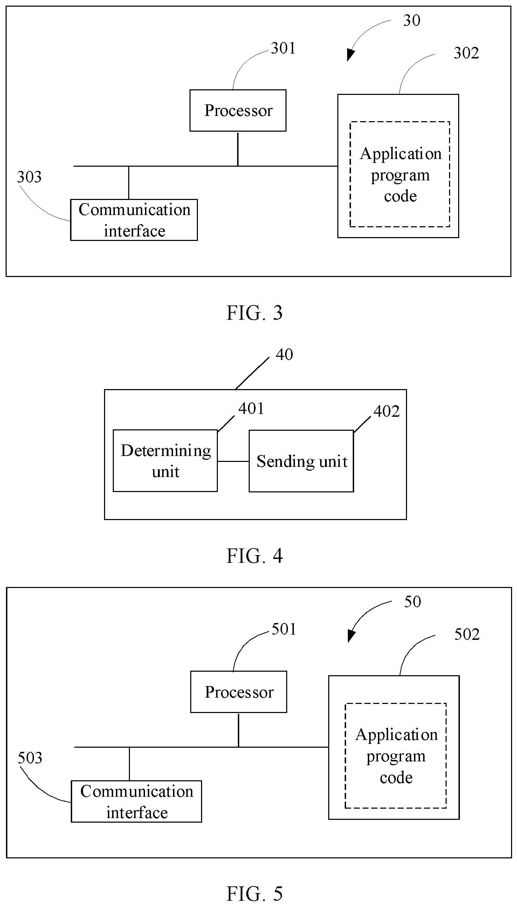

In a possible implementation, the device is further configured to:
receive first index information sent by the network device, where the first index information is used to indicate the highest MCS index of pi/2-BPSK used by the terminal device for transmission.
In a possible implementation, the device is further configured to:
receive second index information sent by the network device, where the second index information is used to indicate the highest MCS index of FT-pi/2-BPSK used by the terminal device for transmission.
In a possible implementation, the device is further configured to:
receive a bandwidth adjustment factor sent by the network device.
In this embodiment, the terminal device 20 is presented in a form of units. The "unit" herein may be an application-specific integrated circuit (application-specific integrated circuit, ASIC), a processor and a memory that execute one or more software or firmware programs, an integrated logic circuit, and/or another device that can provide the foregoing functions. In addition, the first determining unit 202, the second determining unit 203, and the coding unit 204 may be implemented by using a processor 301 of a terminal device shown in FIG. 3.
The terminal device 30 shown in FIG. 3 may be implemented by using the structure in FIG. 2. The terminal device 30 includes at least one processor 301, at least one memory 302, and at least one communication interface 303.

The processor 301, the memory 302, and the communication interface 303 are connected and communicate with each other by using a communication bus.

The processor 301 may be a general-purpose central processing unit (CPU), a microprocessor, an application-specific integrated circuit (application-specific integrated circuit, ASIC), or one or more integrated circuits configured to control execution of the foregoing solution program.

The communication interface 303 is configured to communicate with another device or a communication network, such as the Ethernet, a radio access network (RAN), or a wireless local area network (Wireless Local Area Networks, WLAN).

The memory 302 may be a read-only memory (read-only memory, ROM) or another type of static storage device capable of storing static information and instructions, or a random access memory (Random Access Memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM), or other compact disc storage or optical disc storage (including a compressed optical disc, a laser disc, an optical disc, a digital versatile disc, a Blu-ray optical disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor through the bus. The memory may alternatively be integrated with the processor.

The memory 302 is configured to store application program code for executing the foregoing solution, and the processor 301 controls the execution. The processor 301 is configured to execute the application program code stored in the memory 302.

The code stored in the memory 302 may execute the modulation and coding determining method provided above, to receive scheduling information sent by a network device, where the scheduling information includes a modulation and coding scheme MCS index and an actual scheduled bandwidth, determine a modulation mode based on the MCS index, determine a coding parameter based on the modulation mode and the actual scheduled bandwidth, and perform channel coding on a signal based on the coding parameter, to obtain a coded signal.

FIG. 4 shows a schematic diagram of a structure of a network device according to an embodiment of this application. As shown in FIG. 4, the network device 40 includes:

a determining unit 401, configured to determine scheduling information, where the scheduling information includes a modulation and coding scheme MCS index and an actual scheduled bandwidth; and
a sending unit 402, configured to send the scheduling information, where the scheduling information is used to indicate the terminal device to perform channel coding.

In a possible implementation, the device is further configured to:
send first index information to the terminal device, where the first index information is used to indicate a highest MCS index of pi/2-BPSK used by the terminal device for transmission.

In a possible implementation, the device is further configured to:
send second index information to the terminal device, where the second index information is used to indicate a highest MCS index of FT-pi/2-BPSK used by the terminal device for transmission.

In a possible implementation, the device is further configured to:
send a bandwidth adjustment factor to the terminal device.

In a possible implementation, the device is further configured to:
receive a first MCS index, where the first MCS index is the highest MCS index of pi/2-BPSK used by the terminal device for transmission.

In a possible implementation, the device is further configured to:
receive a second MCS index, where the second MCS index is the highest MCS index of FT-pi/2-BPSK used by the terminal device for transmission.

In this embodiment, the network device 40 is presented in a form of units. The "unit" herein may be an application-specific integrated circuit (application-specific integrated circuit, ASIC), a processor and a memory that execute one or more software or firmware programs, an integrated logic circuit, and/or another device that can provide the foregoing functions. In addition, the determining unit 401 may be implemented by using a processor 501 of a network device shown in FIG. 5.

The network device 50 shown in FIG. 5 may be implemented by using the structure in FIG. 4. The network device 50 includes at least one processor 501, at least one memory 502, and at least one communication interface 503. The processor 501, the memory 502, and the communication interface 503 are connected and communicate with each other by using a communication bus.

The processor 501 may be a general-purpose central processing unit (CPU), a microprocessor, an application-specific integrated circuit (application-specific integrated circuit, ASIC), or one or more integrated circuits configured to control execution of the foregoing solution program.

The communication interface 503 is configured to communicate with another device or a communication network, such as the Ethernet, a radio access network (RAN), or a wireless local area network (Wireless Local Area Networks, WLAN).

The memory 502 may be a read-only memory (read-only memory, ROM) or another type of static storage device capable of storing static information and instructions, or a random access memory (Random Access Memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM), or other compact disc storage or optical disc storage (including a compressed optical disc, a laser disc, an optical disc, a digital versatile disc, a Blu-ray optical disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor through the bus. The memory may alternatively be integrated with the processor.

The memory 502 is configured to store application program code for executing the foregoing solution, and the processor 501 controls the execution. The processor 501 is configured to execute the application program code stored in the memory 502.

The code stored in the memory 502 may perform the modulation and coding determining method provided above, to determine scheduling information, where the scheduling information includes a modulation and coding scheme MCS index and an actual scheduled bandwidth; and send the scheduling information, where the scheduling information is used to indicate the terminal device to perform channel coding.

An embodiment of this application further provides a computer storage medium. The computer storage medium may store a program, and when the program is executed, some or all steps of any modulation and coding determining method recorded in the foregoing method embodiments are performed.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

In the foregoing embodiments, the description of each embodiment has respective focuses. For a part that is not described in detail in an embodiment, refer to related descriptions in other embodiments.

In the several embodiments provided in this application, it should be understood that the disclosed apparatus may be implemented in other manners. For example, the described apparatus embodiments are merely examples. For example, division into the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage. Based on such an understanding, the technical solutions of this application essentially, or the part contributing to the current technology, or all or some of the technical solutions may be implemented in the form of a software product. The software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a read-only memory (ROM, Read-Only Memory), a random access memory (RAM, Random Access Memory), a removable hard disk, a magnetic disk, or an optical disc.

A person of ordinary skill in the art may understand that all or some of the steps of the methods in embodiments may be implemented by a program instructing related hardware. The program may be stored in a computer-readable memory. The memory may include a flash memory, a read-only memory (English: Read-Only Memory, ROM for short), a random access memory (English: Random Access Memory, RAM for short), a magnetic disk, an optical disc, or the like.

The embodiments of this application are described in detail above. The principle and implementation of this application are described herein through specific examples. The description about the embodiments is merely provided to help understand the method and core ideas of this application. In addition, persons of ordinary skill in the art can make variations and modifications to this application in terms of the specific implementations and application scopes according to the ideas of this application. Therefore, the content of specification shall not be construed as a limit to this application.

## Claims

1. A modulation and coding determining method, applied to a terminal device, wherein the method comprises:

   receiving scheduling information sent by a network device, wherein the scheduling information comprises a modulation and coding scheme MCS index and an actual scheduled bandwidth;
   determining a modulation mode based on the MCS index;
   determining a coding parameter based on the modulation mode and the actual scheduled bandwidth; and
   performing channel coding on a signal based on the coding parameter, to obtain a coded signal.

2. The method according to claim 1, wherein the coding parameter comprises at least a transport block size and an adjusted code rate, and the determining a coding parameter based on the modulation mode and the actual scheduled bandwidth comprises:

   determining a bandwidth adjustment factor based on the modulation mode;
   determining a virtual scheduled bandwidth based on the bandwidth adjustment factor and the actual scheduled bandwidth;
   determining the adjusted code rate based on the modulation mode and the bandwidth adjustment factor; and
   determining the transport block size based on the adjusted code rate and the virtual scheduled bandwidth.

3. The method according to claim 2, wherein the determining the adjusted code rate based on the modulation mode and the bandwidth adjustment factor comprises:

   determining an original code rate based on the modulation mode; and
   determining the adjusted code rate based on the original code rate and the bandwidth adjustment factor.

4. The method according to any one of claims 1 to 3, wherein the determining a modulation mode based on the MCS index comprises:

   determining an index interval in which the MCS index is located; and
   determining the modulation mode based on the index interval.

5. The method according to any one of claims 1 to 4, wherein the method further comprises:
   determining a modulation mode for retransmission based on the modulation mode.

6. The method according to any one of claims 1 to 5, wherein the method further comprises:
   sending a first MCS index to the network device, wherein the first MCS index is a highest MCS index of pi/2-BPSK used by the terminal device for transmission.

7. The method according to any one of claims 1 to 6, wherein the method further comprises:
   sending a second MCS index to the network device, wherein the second MCS index is a highest MCS index of FT-pi/2-BPSK used by the terminal device for transmission.

8. The method according to any one of claims 1 to 7, wherein the method further comprises:

   determining a type of a DMRS based on the modulation mode; and
   determining a sequence length of the DMRS based on the actual scheduled bandwidth.

9. The method according to claim 8, wherein the method further comprises:

performing truncation and filtering on the coded signal to obtain a filtered signal; and
multiplexing the filtered signal and the DMRS to obtain a multiplexed signal.

**10.** The method according to claim 8, wherein the method further comprises:

multiplexing the DMRS and the coded signal to obtain a multiplexed signal; and
performing truncation and filtering on the multiplexed signal to obtain a filtered signal.

**11.** The method according to any one of claims 1 to 10, wherein the method further comprises:
receiving first index information sent by the network device, wherein the first index information is used to indicate the highest MCS index of pi/2-BPSK used by the terminal device for transmission.

**12.** The method according to any one of claims 1 to 11, wherein the method further comprises:
receiving second index information sent by the network device, wherein the second index information is used to indicate the highest MCS index of FT-pi/2-BPSK used by the terminal device for transmission.

**13.** The method according to claim 1, wherein the method further comprises:
receiving a bandwidth adjustment factor sent by the network device.

**14.** A modulation and coding determining method, applied to a network device, wherein the method comprises:

determining scheduling information, wherein the scheduling information comprises a modulation and coding scheme MCS index and an actual scheduled bandwidth; and
sending the scheduling information, wherein the scheduling information is used to indicate a terminal device to perform channel coding.

**15.** The method according to claim 14, wherein the method further comprises:
sending first index information to the terminal device, wherein the first index information is used to indicate a highest MCS index of pi/2-BPSK used by the terminal device for transmission.

**16.** The method according to claim 14 or 15, wherein the method further comprises:
sending second index information to the terminal device, wherein the second index information is used to indicate a highest MCS index of FT-pi/2-BPSK used by the terminal device for transmission.

**17.** The method according to any one of claims 14 to 16, wherein the method further comprises:
sending a bandwidth adjustment factor to the terminal device.

**18.** The method according to any one of claims 14 to 17, wherein the method further comprises:
receiving a first MCS index, wherein the first MCS index is the highest MCS index of pi/2-BPSK used by the terminal device for transmission.

**19.** The method according to claim 18, wherein the method further comprises:
receiving a second MCS index, wherein the second MCS index is the highest MCS index of FT-pi/2-BPSK used by the terminal device for transmission.

**20.** A terminal device, wherein the device comprises:

a receiving unit, configured to receive scheduling information sent by a network device, wherein the scheduling information comprises a modulation and coding scheme MCS index and an actual scheduled bandwidth;
a first determining unit, configured to determine a modulation mode based on the MCS index;
a second determining unit, configured to determine a coding parameter based on the modulation mode and the actual scheduled bandwidth; and
a coding unit, configured to perform channel coding on a signal based on the coding parameter, to obtain a coded signal.

**21.** The device according to claim 20, wherein the coding parameter comprises at least a transport block size and an adjusted code rate, and the second determining unit is configured to:

determine a bandwidth adjustment factor based on the modulation mode;
determine a virtual scheduled bandwidth based on the bandwidth adjustment factor and the actual scheduled bandwidth;
determine the adjusted code rate based on the modulation mode and the bandwidth adjustment factor; and
determine the transport block size based on the adjusted code rate and the virtual scheduled bandwidth.

22. The device according to claim 21, wherein in the aspect of determining the adjusted code rate based on the modulation mode and the bandwidth adjustment factor, the second determining unit is configured to:

determine an original code rate based on the modulation mode; and
determine the adjusted code rate based on the original code rate and the bandwidth adjustment factor.

23. The device according to any one of claims 20 to 22, wherein the first determining unit is configured to:

determine an index interval in which the MCS index is located; and
determine the modulation mode based on the index interval.

24. The device according to any one of claims 20 to 23, wherein the device is further configured to:
determine a modulation mode for retransmission based on the modulation mode.

25. The device according to any one of claims 20 to 24, wherein the device is further configured to:
send a first MCS index to the network device, wherein the first MCS index is a highest MCS index of pi/2-BPSK used by the terminal device for transmission.

26. The device according to any one of claims 20 to 25, wherein the device is further configured to:
send a second MCS index to the network device, wherein the second MCS index is a highest MCS index of FT-pi/2-BPSK used by the terminal device for transmission.

27. The device according to any one of claims 20 to 26, wherein the device is further configured to:

determine a type of a DMRS based on the modulation mode; and
determine a sequence length of the DMRS based on the actual scheduled bandwidth.

28. The device according to claim 27, wherein the device is further configured to:

perform truncation and filtering on the coded signal to obtain a filtered signal; and
multiplex the filtered signal and the DMRS to obtain a multiplexed signal.

29. The device according to claim 27, wherein the device is further configured to:

multiplex the DMRS and the coded signal to obtain a multiplexed signal; and
perform truncation and filtering on the multiplexed signal to obtain a filtered signal.

30. The device according to any one of claims 20 to 29, wherein the device is further configured to:
receive first index information sent by the network device, wherein the first index information is used to indicate the highest MCS index of pi/2-BPSK used by the terminal device for transmission.

31. The device according to any one of claims 20 to 30, wherein the device is further configured to:
receive second index information sent by the network device, wherein the second index information is used to indicate the highest MCS index of FT-pi/2-BPSK used by the terminal device for transmission.

32. The device according to claim 20, wherein the device is further configured to:
receive a bandwidth adjustment factor sent by the network device.

33. A network device, wherein the device comprises:

a determining unit, configured to determine scheduling information, wherein the scheduling information comprises a modulation and coding scheme MCS index and an actual scheduled bandwidth; and

a sending unit, configured to send the scheduling information, wherein the scheduling information is used to indicate a terminal device to perform channel coding.

34. The device according to claim 33, wherein the device is further configured to:
send first index information to the terminal device, wherein the first index information is used to indicate a highest MCS index of pi/2-BPSK used by the terminal device for transmission.

35. The device according to claim 33 or 34, wherein the device is further configured to:
send second index information to the terminal device, wherein the second index information is used to indicate a highest MCS index of FT-pi/2-BPSK used by the terminal device for transmission.

36. The device according to any one of claims 33 to 35, wherein the device is further configured to:
send a bandwidth adjustment factor to the terminal device.

37. The device according to any one of claims 33 to 36, wherein the device is further configured to:
receive a first MCS index, wherein the first MCS index is the highest MCS index of pi/2-BPSK used by the terminal device for transmission.

38. The device according to claim 37, wherein the device is further configured to:
receive a second MCS index, wherein the second MCS index is the highest MCS index of FT-pi/2-BPSK used by the terminal device for transmission.

39. A terminal device, comprising:

a memory, configured to store instructions; and
at least one processor, coupled to the memory, wherein
when the at least one processor executes the instructions, the instructions enable the processor to perform the method according to any one of claims 1 to 13.

40. A network device, comprising:

a memory, configured to store instructions; and
at least one processor, coupled to the memory, wherein
when the at least one processor executes the instructions, the instructions enable the processor to perform the method according to any one of claims 14 to 19.

41. A computer storage medium, wherein the computer storage medium stores a computer program, and the computer program comprises program instructions; and when executing the program instructions, a processor performs the method according to any one of claims 1 to 19.

| Coded signal | → | pi/2-BPSK modulation | → | DFT | → | Frequency truncating/ Frequency domain spectral shaping | → | IFFT and CP addition | → | DFT-s-OFDM symbol |

Virtual scheduled bandwidth

Virtual scheduled bandwidth

Actual scheduled bandwidth

FIG. 1A

| Coded signal | → | QPS modulation | → | DFT | → | FDSS | → | IFFT and CP addition | → | DFT-s-OFDM symbol |

Virtual scheduled bandwidth

Virtual scheduled bandwidth

Actual scheduled bandwidth

FIG. 1B

| Terminal device | | Network device |
|---|---|---|

S101: Determine scheduling information, where the scheduling information includes an MCS index and an actual scheduled bandwidth

S102: Scheduling information, used to indicate to perform channel coding

S103: Receive the scheduling information

S104: Determine a modulation mode based on the MCS index

S105: The terminal device determines a coding parameter based on the modulation mode and the actual scheduled bandwidth

S106: Perform channel coding on a signal based on the coding parameter, to obtain a coded signal

FIG. 1C

| MCS Index (index) $I_{MCS}$ | Modulation Order (modulation order) $Q_m$ | Target code Rate (adjusted code rate) Rx 1024 | Spectral efficiency (spectral efficiency) |
|---|---|---|---|
| 0 | q | 240/q | 0.2344 |
| 1 | q | 314/q | 0.3066 |
| **2** | **q** | **386/q** | **0.3770** |
| **3** | **q** | **502/q** | **0.4902** |
| **4** | **q** | **616/q** | **0.6016** |
| **5** | **q** | **758/q** | **0.7402** |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| ... | ... | ... | ... |

FIG. 1D

FIG. 2

30

301

302

Processor

Application
program
code

303

Communication
interface

FIG. 3

40

401

402

Determining
unit

Sending unit

FIG. 4

50

501

502

Processor

Application
program
code

503

Communication
interface

FIG. 5

## INTERNATIONAL SEARCH REPORT

| International application No. |
| --- |
| **PCT/CN2021/083666** |

**A.    CLASSIFICATION OF SUBJECT MATTER**

H04L 27/26(2006.01)i

According to International Patent Classification (IPC) or to both national classification and IPC

**B.    FIELDS SEARCHED**

Minimum documentation searched (classification system followed by classification symbols)

H04L H04B H04W

Documentation searched other than minimum documentation to the extent that such documents are included in the fields searched

Electronic data base consulted during the international search (name of data base and, where practicable, search terms used)

CNABS; CNTXT; CNKI; WOTXT; EPTXT; USTXT; VEN; 3GPP: 调制编码模式, 索引, 调度, 带宽, 调整, 编码, 峰均功率比, 二进制相移键控, MCS, index, scheduling, bandwidth, adjust, encoding, PAPR, BPSK

**C.    DOCUMENTS CONSIDERED TO BE RELEVANT**

| Category* | Citation of document, with indication, where appropriate, of the relevant passages | Relevant to claim No. |
| --- | --- | --- |
| X | CN 112398773 A (HUAWEI TECHNOLOGIES CO., LTD.) 23 February 2021 (2021-02-23) description, paragraphs 115-284 | 1-41 |
| A | EP 3726792 A1 (OPTIS WIRELESS TECHNOLOGY LLC) 21 October 2020 (2020-10-21) entire document | 1-41 |
| A | QUALCOMM INCORPORATED. ""R1-1718594 Low PAPR Modulation"" *3GPP TSG RAN WG1 Meeting 90bis,* Vol. , No. , 02 October 2017 (2017-10-02), ISSN: , entire document | 1-41 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 December 2021** | **27 December 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| International application No. |
| --- |
| **PCT/CN2021/083666** |

| Patent document cited in search report | | | Publication date (day/month/year) | Patent family member(s) | | | Publication date (day/month/year) |
| --- | --- | --- | --- | --- | --- | --- | --- |
| CN | 112398773 | A | 23 February 2021 | None | | | |
| EP | 3726792 | A1 | 21 October 2020 | HU | E051663 | T2 | 29 March 2021 |
| | | | | RU | 2008112140 | A | 10 November 2009 |
| | | | | RU | 2426256 | C2 | 10 August 2011 |
| | | | | EP | 2637377 | A1 | 11 September 2013 |
| | | | | EP | 2637377 | B1 | 09 November 2016 |
| | | | | US | 2015055605 | A1 | 26 February 2015 |
| | | | | US | 9094923 | B2 | 28 July 2015 |
| | | | | EP | 2637376 | A1 | 11 September 2013 |
| | | | | EP | 2637376 | B1 | 16 November 2016 |
| | | | | EP | 1914948 | A1 | 23 April 2008 |
| | | | | EP | 1914948 | A4 | 20 February 2013 |
| | | | | EP | 1914948 | B1 | 12 March 2014 |
| | | | | US | 2017303210 | A1 | 19 October 2017 |
| | | | | US | 10484952 | B2 | 19 November 2019 |
| | | | | ES | 2611181 | T3 | 05 May 2017 |
| | | | | ES | 2611205 | T3 | 05 May 2017 |
| | | | | US | 2020045649 | A1 | 06 February 2020 |
| | | | | US | 10863448 | B2 | 08 December 2020 |
| | | | | WO | 2007037412 | A1 | 05 April 2007 |
| | | | | RU | 2013139153 | A | 27 February 2015 |
| | | | | RU | 2542750 | C1 | 27 February 2015 |
| | | | | PL | 2637376 | T3 | 31 May 2017 |
| | | | | PL | 2637377 | T3 | 30 June 2017 |
| | | | | US | 2012155519 | A1 | 21 June 2012 |
| | | | | US | 8441936 | B2 | 14 May 2013 |
| | | | | CN | 103152305 | A | 12 June 2013 |
| | | | | RU | 2462826 | C1 | 27 September 2012 |
| | | | | JP | WO2007037412 | A1 | 16 April 2009 |
| | | | | JP | 4734337 | B2 | 27 July 2011 |
| | | | | ES | 2805456 | T3 | 12 February 2021 |
| | | | | RU | 2503136 | C1 | 27 December 2013 |
| | | | | US | 2013182669 | A1 | 18 July 2013 |
| | | | | US | 8619619 | B2 | 31 December 2013 |
| | | | | EP | 3337113 | A1 | 20 June 2018 |
| | | | | EP | 3337113 | B1 | 27 May 2020 |
| | | | | CN | 101278533 | A | 01 October 2008 |
| | | | | CN | 101278533 | B | 13 February 2013 |
| | | | | US | 2014044080 | A1 | 13 February 2014 |
| | | | | US | 8923108 | B2 | 30 December 2014 |
| | | | | EP | 3148143 | A1 | 29 March 2017 |
| | | | | EP | 3148143 | B1 | 31 January 2018 |
| | | | | PL | 3148143 | T3 | 31 July 2018 |
| | | | | US | 2010188984 | A1 | 29 July 2010 |
| | | | | US | 8149727 | B2 | 03 April 2012 |
| | | | | ES | 2666881 | T3 | 08 May 2018 |
| | | | | US | 2015289213 | A1 | 08 October 2015 |
| | | | | US | 9723573 | B2 | 01 August 2017 |
| | | | | US | 2021051603 | A1 | 18 February 2021 |
| | | | | PL | 3337113 | T3 | 16 November 2020 |

Form PCT/ISA/210 (patent family annex) (January 2015)